Europäisches Patentamt

European Patent Office

Office européen des brevets

(19)

(11) Veröffentlichungsnummer: **0 393 491**

**A1**

(12) # EUROPÄISCHE PATENTANMELDUNG

(21) Anmeldenummer: **90106966.6**

(22) Anmeldetag: **11.04.90**

(51) Int. Cl.5: **C08J 3/12, C09J 101/26, C08L 1/26, //(C09J101/26, 131:04,133:08,133:10)**

(30) Priorität: **20.04.89 DE 3912983**

(43) Veröffentlichungstag der Anmeldung:
**24.10.90 Patentblatt 90/43**

(84) Benannte Vertragsstaaten:
**GR**

(71) Anmelder: **Henkel Kommanditgesellschaft auf Aktien**
**Postfach 1100 Henkelstrasse 67**
**D-4000 Düsseldorf 1(DE)**

(72) Erfinder: **Wegner, Jürgen, Dr.**
**Siegfriedstrasse 21**
**D-4000 Düsseldorf-Oberkassel(DE)**
Erfinder: **Haller, Werner, Dr.**
**Isarstrasse 8**
**D-4006 Erkrath-Hochdahl(DE)**
Erfinder: **Schöttmer, Bernhard, Dr.**
**Johannes-Hesse-Strasse 31**
**D-4000 Düsseldorf 13(DE)**
Erfinder: **Heinrich, Erbo**
**Mülheimer Strasse 17**
**D-4030 Ratingen 1(DE)**

(54) **Rieselfähige schnell aufschliessende Trockenpulver mit Klebstoffcharakter, Verfahren zu ihrer Herstellung und ihre Verwendung.**

(57) Beschrieben werden rieselfähige feinkörnige Trockenpulver auf Basis einer wasserlöslichen und/oder wasserquellbaren Kombination von nichtionogenen Celluloseethern und getrockneten Redispersionspolymeren gewünschtenfalls in Abmischung mit weiteren Hilfsstoffen mit und/oder ohne Klebkraft. Die neuen Trockenpulvern kennzeichnen sich durch eine Kornstruktur, die geschlossene Kerne der nichtionogenen Celluloseether aufweist, die von einer Hülle des Redispersionspolymeren umfaßt und mit dieser haftfest verbunden sind. In einer weiteren Ausführungsform betrifft die Erfindung das Verfahren zur Herstellung dieser neuen rieselfähigen Trockenpulver, das sich dadurch kennzeichnet, daß man die nichtionogenen Celluloseether als Pulver mit der wäßrigen Polymerdispersion vermischt und dabei die Temperatur der wäßrigen Phase wenigstens beim Trübungs- bzw. Flockungspunkt der nichtionogenen Celluloseether oder darüber hält und unter diesen Bedingungen das wäßrige Stoffgemisch der Sprüh- trocknung unterwirft. Die neuen Kombinationsmaterialien eignen sich in breiter Anwendung als Klebstoffe und/oder Bindemittel mit verbesserten Eigenschaften.

## Rieselfähige schnell aufschließende Trockenpulver mit Klebstoffcharakter, Verfahren zu ihrer Herstellung und ihre Verwendung

Die Erfindung betrifft neue rieselfähige, schnell aufschließende Trockenpulver mit Klebstoffcharakter, ein Verfahren zu ihrer Herstellung und ihre Verwendung.

Der Einsatz von sprühgetrocknetem Redispersionspulver, z. B. auf Basis von Polyvinylacetat, in Tapetenkleistern und anderen Wandbelagsklebstoffen, an die hinsichtlich Klebkraft und Feuchtfestigkeit besondere Anforderungen gestellt werden, ist seit langem bekannt.

Solche Klebstoffe setzen sich typischerweise aus Celluloseethern (Methylcellulose, Methylhydroxyethylcellulose, MHPC und/oder Carboxymethylcellulose) und/oder Stärkeethern, vorzugsweise Carboxymethylstärke, Hydroxypropylstärke und/oder Quellstärke zusammen. Sie enthalten je nach Einsatzzweck und Qualitätsspektrum zumeist bis zu 40 Gew.-%, in Einzelfällen sogar bis zu ca. 90 Gew.-% Homo-bzw. Copolymer-Redispersionspulver beispielsweise auf Basis von Polyvinylacetat, Vinylacetat-Maleinatmischpolymeren, Ethylen-Vinylacetatmischpolymeren, Acrylat und/oder Methacrylat-Homo-und/oder Copolymeren - im folgenden als (Meth)acrylatpolymere bezeichnet - wobei Styrolacrylatpolymere ein Beispiel für Copolymerisate der zuletzt angegebenen Art sind.

Markttypische sogenannte Spezialkleister enthalten beispielsweise etwa 40 Gew.-% bis 60 Gew.-% nichtionogene Celluloseether, etwa 25 Gew.-% bis 50 Gew.-% Polyvinylacetat-Redispersionspulver, sonstige Hilfsstoffe, Netz- und Konservierungsmittel. Andere Spezialkleister mit meist deutlich niedrigerem Qualitätsniveau enthalten Carboxymethylcellulose bzw. Stärkeether. Insbesondere in der Kombination von Naß- und Trockenklebkraft, Feuchtfestigkeit und Stabilität der in Wasser im empfohlenen Ansatzverhältnis hergestellten Kleister- bzw. Klebstoff-Flotte sind durch enzymatischen Abbau bzw. mikrobiologischen Angriff relativ enge Grenzen gesetzt. Tapetenkleister der vorstehend genannten Art sind beispielsweise aus der EP 0 103 772 bekannt.

In allen Fällen liegen diese Produkte als physikalische Gemenge der einzelnen Komponenten vor und neigen aufgrund der unterschiedlichen Partikelgröße und -dichte zur Entmischung und beim Einrühren in Nasser zur Staubentwicklung. Es hat daher schon viele Versuche gegeben, die Partikelgröße der Einzelkomponenten so anzugleichen, daß eine Entmischung praktisch ausgeschaltet ist und auf diese Weise auch die Teilentnahme aus einer Verkaufseinheit empfohlen werden könnte. Dies macht aber erforderlich, daß sämtliche Inhaltsstoffe auf die Korngröße des Polymer-Redispersionspulvers zu reduzieren und zusätzlich die Schüttdichten der Einzelkomponenten hinreichend einander anzugleichen, da dieses die limitierenden Faktoren der Gesamtformulierung sind.

Redispersionspulver werden bekanntlich nach der bisherigen Praxis durch Sprühtrocknung von Polymerdispersionen in Sprühtürmen hergestellt. Hierbei wird die Polymerdispersion durch geeignete Sprüh- bzw. Dispergiereinrichtungen feinteilig zerstäubt und im erhitzten Gas- bzw. Luftstrom getrocknet, durch geeignete technische Vorrichtungen aus dem Sprühturm geführt und in Trockensilos gelagert. Dem Fachmann bekannt, kann die Korngrößenverteilung und die Redispergierfähigkeit des resultierenden Produktes in relativ weiten Grenzen gesteuert werden. Hierbei werden sowohl technologische Maßnahmen eingesetzt, beispielsweise durch Wahl des Zerstäubungsgrades, der Trocknungsbedingungen und der Verweilzeit, es wird aber auch durch Einsatz von Hilfsstoffen beispielsweise Netzmitteln oder Zusatz von Polyvinylalkohol Einfluß auf die Produkteigenschaften genommen.

Für den vorgesehenen Einsatzzweck in Wandbelagsklebstoffen wäre es vorteilhaft, die Kornverteilung des Redispersionspulvers möglichst eng und in einer mittleren Korngröße von ca. 100 $\mu$m bis 300 $\mu$m, vorzugsweise etwa 150 $\mu$m bis 200 $\mu$m zu wählen, um Staubentwicklung sicher auszuschließen und gleichzeitig die technisch aufwendige Mahlung der übrigen Formulierungskomponenten, insbesondere von Celluloseethern, auf einem wirtschaftlich vertretbaren Niveau zu halten.

Diese an sich wünschenswerte Korngröße von Redispersionspulvern stößt jedoch auf die Schwierigkeit, daß die Re-Emulgierung bei Kontakt mit Wasser entweder sehr lange, dem Verarbeiter nicht zumutbare Quellzeiten erforderlich machen würde und im Einzelfalle sogar überhaupt nicht oder nur unvollständig vonstatten geht. Hierdurch entstehen beim Auftrag sehr rauhe Klebstofffilme und im Extremfall Durchmarkierungen durch optisch empfindliche Wandbeläge, z. B. bei Metalltapeten. Relativ grobteilige, sicher re-emulgierende Polymerpulver erfordern daher bisher den Zusatz höherer Mengen an Polyvinylalkohol von geeignetem Molekulargewicht und Verseifungsgrad. Nachteilig wird hierdurch jedoch die permanente und reversible Emulgierung ebenfalls erhöht und damit die an sich gewünschte hohe Feuchtfestigkeit limitiert.

Im Interesse des Verarbeiters sollten Wandbelagsklebstoffe nach Einrühren in Wasser nach möglichst kurzer Quellzeit verarbeitungsfertig vorliegen, hierbei aber möglichst wenig Staub entwikkeln und klumpenfrei zubereitbar sein. Technisch wird das heute so gelöst, daß speziell die dafür eingesetzten Celluloseether auf eine Kornverteilung vermahlen und gesichtet werden - z. B. bei den sogenannten Instant-Spezialkleistern - die im Bereich von etwa 50 μm bis 400 μm, vorzugsweise im Bereich von etwa 100 μm bis 200 μm liegt. Celluloseether dieser Art schließen allerdings im Kontakt mit Wasser derart schnell auf, daß ihre Neigung zur Klumpenbildung wiederum nur durch spezielle Maßnahmen zur gesteuerten Lösungsverzögerung vermieden werden kann.

Marktübliche Produkte dieser Art zeigen zwar nur eine geringe Entmischungstendenz, sie neigen jedoch zu erheblicher Staubentwicklung, müssen zur Vermeidung des Klumpens beim Einrühren in Wasser besonders sorgfältig verarbeitet werden und können - sofern nicht auf eine sehr ausgewogene Formulierung geachtet wird - nach den zuvor beschriebenen Sachzusammenhängen nur eine unzureichende Feuchtfestigkeit aufweisen.

Aufgabe der vorliegenden Erfindung war es daher, eine schnell aufschließende hochwertige Bindemittelkombination der geschilderten Art bereitzustellen, die sich nicht entmischt, staub- und klumpenfrei in Wasser eingerührt werden kann und deren Feuchtfestigkeit nicht den genannten einschränkenden Begrenzungen unterliegt. Bevorzugtes Einsatzgebiet des erfindungsgemäß beschriebenen Produkttyps sollten Wandbelagsklebstoffe sein, das verbesserte Material soll sich aber auch für andere Zwecke, beispielsweise für die temporäre Fixierung von Bodenbelägen, für die Formulierung von Wandfarben in Pulverform, als Zusatz für Gips- und Zementspachtel, für Wandmakulaturen und Modelliermassen sowie für sonstige Anwendungsbereiche eignen, bei denen Celluloseether, Stärkederivate und Redispersionspulver kombiniert eingesetzt werden. Als weitere Forderung sollte eine möglichst große Variationsbreite bei der Kombination aller in Betracht kommenden Einzelkomponenten ohne Abstrich an wesentlichen Eigenschaften gesichert sein.

Die technische Lösung dieser Aufgabenstellung im Sinne der Erfindung geht von Stoffgemischen aus, die als wesentliche Bestandteile wasserlösliche und/oder wasserquellbare nichtionogene Celluloseether in Kombination mit Dispersionspolymeren enthalten. Wäßrige Aufbereitungen, die diese beiden Stoffmischungen in inniger Abmischung miteinander enthalten, werden unter bestimmt ausgewählten Temperaturbedingungen hergestellt und dann der Sprühtrocknung unterworfen. Die Lehre der Erfindung macht sich dabei die Tatsache zu Nutze, daß nichtionogene Celluloseether in Wasser bei erhöhten Temperaturen je nach Substitutionsart und Substitutionsgrad ein endliches oberes Löslichkeitslimit aufweisen, wobei diese Grenztemperatur als Trübungs- oder auch als Flockungspunkt bezeichnet wird. Werden wäßrige Aufbereitungen nichtionogener Celluloseether bei dieser Grenztemperatur oder darüber gehalten, so gelingt es problemlos, auch große Anteile dieser Cellulosederivate in die wäßrige Zubereitung einzuarbeiten, ohne einen Anstieg der Lösungsviskosität auszulösen, der das Versprühen der wäßrigen Zubereitung unmöglich machen würde. Der Anstieg der Lösungsviskosität hält sich vielmehr bei Einhaltung dieser Temperaturbedingungen im wäßrigen System in einem ähnlichen Bereich, wie er bei Zugabe inerter Zusatzmittel, beispielsweise pulverförmiger Alpha-Cellulose mit ähnlicher Kornverteilung oder bei Zusatz anderer Füllstoffe ebenfalls auftreten würde.

Gegenstand der Erfindung sind dementsprechend in einer ersten Ausführungsform rieselfähige feinkörnige Trockenpulver auf Basis einer wasserlöslichen und/oder wasserquellbaren Kombination von nichtionogenen Celluloseethern und getrockneten Redispersionspolymeren gewünschtenfalls in Abmischung mit weiteren Hilfsstoffen mit und/oder ohne Klebkraft. Diese rieselfähigen feinkörnigen Trockenpulver sind erfindungsgemäß dadurch gekennzeichnet, daß die Kornstruktur des wenigstens überwiegenden Anteils des körnigen Trockenguts geschlossene Kerne der nichtionogenen Celluloseether aufweist, die von einer Hülle des Redispersionspolymeren umfaßt und mit dieser haftfest verbunden sind. Im jeweiligen Einzelkorn kann dabei insbesondere auch eine Mehrzahl von Kernen aus nichtionogenen Celluloseethern von der Polymerhülle haftfest umschlossen sein, wobei diese einzelnen Kerne auf Basis der nichtionogenen Celluloseether auch unterschiedliche Teilchengrößen aufweisen können. Unter nichtionogenen Celluloseether versteht der Fachmann Alkyl-, Aralkyl- und Hydroxyalkylether oder Cellulose. Es gibt einfache Ether mit nur einem und Mischether mit zwei oder mehr unterschiedlichen Substituenten in der Cellulosekette. So kann z.B. bei der Methylcellulose durch eine zusätzliche, geringfügige Alkoxylierung durch Umsetzung mit Ethylenoxid und/oder Propylenoxid die Löslichkeit und der Flockungspunkt des Cellulosederivats gezielt beeinflußt werden.

In einer weiteren Ausführungsform betrifft die Erfindung ein Verfahren zur Herstellung dieser rieselfähigen feinkörnigen Trockenpulver, wobei dieses Verfahren dadurch gekennzeichnet ist, daß man die nichtionogenen Celluloseether als Pulver oder wäßrige Pulveraufschlämmung mit der wäßrigen Polymerdispersion innig vermengt, wobei gewünschtenfalls auch zusätzliche Wasseranteile eingemischt werden können. Im erfindungsgemäßen Verfahren wird dabei darauf geachtet, daß die Temperatur der wäßrigen Phasen und insbesondere der jeweils mit dem nichtionogenen Celluloseether in Berührung stehenden wäßrigen Phase wenigstens beim Trübungspunkt der eingesetzten nichtionogenen Cellulosether oder darüber liegt. Das derart gewonnene wäßrige Stoffgemisch wird dann unter Einhaltung der angegebenen Temperaturbedingungen einer an sich bekannten Sprühtrocknung unterworfen.

Die Erfindung betrifft schließlich in einer weiteren Ausführungsform die Verwendung der rieselfähigen feinteiligen Trockenpulver für die bereits beschriebene und im nachfolgenden noch im einzelnen geschilderten Einsatzzwecke.

Als nichtionogene Celluloseether eignen sich für die Zwecke der Erfindung alle Verbindungen dieser Art, die in ihrem Lösungsverhalten bei erhöhten Temperaturen - vorzugsweise bei Temperaturen von wenigstens etwa 60 °C - das Phänomen des Ausflockens zeigen und damit durch den sogenannten Trübungs- bzw. Flockungspunkt zu kennzeichnen sind. Nötigenfalls läßt sich diese Eigenschaft schnell und einfach durch einen Laborversuch ermitteln. In Betracht kommen hier vor allem Alkylcellulosen. Die wichtigste Klasse sind niedrig-Alkylcellulosen, deren Alkylreste insbesondere 1 bis 3 C-Atomen aufweisen. Der in der Praxis weitverbreitete Vertreter dieser Klasse ist die Methylcellulose. Der Veretherungsgrad solcher nichtionogenen Celluloseether kann beispielsweise im Bereich von etwa 1,0 - 1,3 als Untergrenze, bis 2,5 - 3,0 als Obergrenze, insbesondere im Bereich von 1,3 - 2,6 liegen. Die Celluloseether, vorzugsweise Methylcellulose, können zusätzlich alkoxyliert z. B. ethoxyliert und/oder propoxyliert sein, wobei hier Alkoxylierungsgrade im Bereich von etwa 0,05 bis 1,5 bevorzugt sein können.

Als in Wasser redispergierbare Polymerverbindungen eignen sich alle in der bisherigen Praxis als reine Mischungsprodukte eingesetzten Polymertypen. In Betracht kommen hier sowohl Homopolymere und/oder Copolymere der jeweils ausgewählten Stoffklassen. Typische Vertreter für diese Polymerverbindungen sind Vinylester niederer Carbonsäuren, wobei dem Vinylacetat und/oder dem Vinylpropionat besondere Bedeutung zukommen. Neben den Homopolymeren auf dieser Basis sind in der Praxis eingesetzte Copolymerisate beispielsweise Vinylacetat/Maleinatcopolymere oder Ethylen/Vinylacetatcopolymere. Eine weitere wichtige Klasse sind entsprechende (Meth)acrylat-Homo- und/oder -Copolymere, wobei ein Beispiel für geeignete Copolymere etwa Styrolacrylat ist. Unter Copolymere werden Copolymerisate verstanden, die aus der Reaktion von zwei oder mehr verschiedenen Stoffklassen, welche sich als polymerisierbare Monomere eignen, hervorgehen.

Diese durch an sich bekannte Dispersions- bzw. Emulsionspolymerisation gewonnenen wäßrigen Polymerdispersionen werden nach dem erfindungsgemäßen Verfahren nun nicht als solche einer Sprühtrocknung unterworfen, sie werden vielmehr - gewünschtenfalls nach Verdünnung mit weiteren Wasseranteilen - auf ein Temperaturniveau erwärmt, das wenigstens dem Trübungs- bzw. Flockungspunkt des bzw. der einzuarbeitenden nichtionogenen Celluloseether entspricht. Bevorzugt kann bei Temperaturen gearbeitet werden, die leicht, z. B. 10 °C bis 20 °C, oberhalb der jeweiligen Trübungspunkte liegen.

Wird ein solcher Slurry permanent auf einem solchen Temperaturniveau gehalten, ist es problemlos möglich, auch große Anteile der nichtionogenen Alkylcelluloseether als vorgebildetes Trockenpulver in die Flüssigphase einzuarbeiten, ohne damit die Viskosität des Slurries in Bereiche zu verschieben, die eine Anwendung der Sprühtechnologie unmöglich machen würde. Unter den erfindungsgemäßen Bedingungen findet vielmehr ein begrenzter Anstieg der Slurry-Viskosität etwa in dem Bereich statt, wie er sonst bei Zugabe inerter Zusatzmittel - beispielsweise bei der Zugabe pulverförmiger Alpha-Cellulose mit ähnlicher Kornverteilung oder anderen üblichen Füllstoffen - ebenfalls auftritt.

Die Mischungsverhältnisse von nichtionogenem Celluloseether zu Redispersionspolymeren - jeweils berechnet als Feststoff - können in einem breiten Bereich variiert werden. Geeignet sind insbesondere entsprechende Mischungsverhältnisse im Bereich von etwa 5 : 95 bis 95 : 5. Bevorzugte Mischungsverhältnisse dieser beiden Hauptkomponenten liegen etwa im Bereich von 60 : 40 bis 40 : 60, wobei gute Produkte im Bereich etwa gleicher Mengenverhältnisse oder bei nur leichtem gewichtsmäßigen Überschuß der nichtionogenen Celluloseether erhalten werden.

Die Viskosität des zur Sprühung eingesetzten Slurries kann in gewissem Ausmaß durch den Wassergehalt des auf Arbeitstemperatur gehaltenen Stoffgemisches beeinflußt werden. Bevorzugt ist das Arbeiten mit Festkörperanteil im Slurry nicht unter 15 Gew.-% und vorzugsweise nicht über etwa 60 Gew.-%. Besonders geeignete Festkörperanteile für den zur Sprühtrocknung kommenden Mehrkomponentenslurry liegen im Bereich von etwa 20 Gew.-% bis 50 Gew.-%.

Beim Versprühen eines solchen Slurries fällt ein rieselfähiges feinkörniges Trockenprodukt an, bei dem es sich fast ausschließlich um polymerumhüllte nichtionogene Alkylcellulosekerne relativ einheitlicher Zusammensetzung und Kornstruktur handelt. Die mittlere Korngröße der erfindungsgemäßen Produkte liegt entsprechend der Ausgangs-Sieblinie der eingesetzten Celluloseether, beispielsweise also der eingesetzten Methylcellulose, deutlich oberhalb der für handelsübliche Redispersionspulver geltenden mittleren Korngröße. Es kann dabei bevorzugt sein, die erfindungsgemäßen rieselfähigen Pulver mit mittleren Teilchendurchmessern im Bereich von etwa 50 μm bis 500 μm und vorzugsweise im Bereich von etwa 100 μm bis 300 μm einzustellen.

Desweiteren können sich die vorstehend beschriebenen Teilchen bzw. Körner zumindest anteilsweise zusammenlagern, was die Bildung von Agglomeraten zur Folge hat, die aus mindestens zweien, ehemals eigenständigen Teilchen bestehen, welche unterschiedlich haftfest miteinander verbunden sein können.

Die erfindungsgemäß erhaltenen Sprühprodukte weisen im Gegensatz zu physikalischen Abmischungen keine nennenswerte Staubentwicklung auf, was bei ihrer Verarbeitung als erheblicher Vorteil zu werten ist.

Die Polymerhülle des einzelnen Korns retardiert die Quellgeschwindigkeit des Cellulosederivats, beispielsweise der Methylcellulose so erheblich, daß eine homogene und klumpenfreie Dispergierung in Wasser möglich ist - und zwar ohne daß eine entsprechend der bisherigen Praxis notwendige Retardierung durch Behandlung des Celluloseethers mit geeigneten Vernetzungsmitteln z.B. Glyoxal/Phosphorsäure notwendig wäre.

Trotz der relativen Grobteiligkeit der Produkte findet - sofern die Sprühtrocknung unter vergleichsweise schonenden Randbedingungen erfolgt - der vollständige Aufschluß in Wasser dennoch innerhalb weniger Minuten statt, wobei offenbar der Celluloseether-Kern durch seine bekannte Sprengwirkung die Polymerhülle in viele kleine Bruchstücke desintegriert. Hierdurch wird die Kontaktfläche zum Aufschlußwasser stark vergrößert und so die Re-Emulgierung beschleunigt.

Dieser Aufschlußmechanismus wiederum erübrigt es, analog zu handelsüblichen Redispersionspulvern beispielsweise auf Basis von Polyvinylacetat bei relativ hoher Grobteiligkeit das gewünschte Re-Emulgierverhalten durch erhöhte Zusätze von Polyvinylalkohol geeigneten Molgewichts und Verseifungsgrades einzustellen, wodurch bekanntlich bisher die einstellbare Feuchtfestigkeit der Kleber negativ beeinflußt wurde. Demgegenüber zeigen mit erfindungsgemäß hergestellten Produkten durchgeführten Verklebungen von Wandbelägen beispielsweise Werte von Anfangshaftung, Endfestigkeit und insbesondere der Feuchtfestigkeit, wie sie bisher in dieser Kombination nicht erzielt werden konnten.

Ein zusätzlicher Vorteil der haftfest polymerumhüllenden Verkapselung von Celluloseethern ist, daß hierdurch auch eine deutliche Phlegmatisierung der von diesem Rohstoff ausgehenden Staubexplosionsneigung erreicht werden kann - mit den sich hieraus ergebenden Vorteilen für die technologische Auslegung der zur Sprühtrocknung geeigneten Anlagen.

Ein weiterer Vorteil liegt darin, daß der bei der Mahlung von Celluloseethertrockenprodukten unvermeidbar anfallende Feinstkornanteil zur Vermeidung von Klumpenbildung und Staubentwicklung nicht abgetrennt zu werden braucht. Auch solche Feinstanteile des eingetragenen pulverförmigen Gutes werden in den Aggregationsprozeß einbezogen, so daß letztlich trotz einer vergleichsweise breiten Verteilung der Teilchengröße des eingesetzten Celluloseetherpulvers eine Einengung des Kornspektrums im rieselfähigen Fertigprodukt durch den Vorgang der Sprühtrocknung erfolgt.

Nach einem weiteren Merkmal der Erfindung ist es möglich, zusätzliche Hilfsmittel mit und/oder ohne Klebeeigenschaften in die erfindungsgemäßen rieselfähigen feinkörnigen Pulver einzuarbeiten. Insbesondere gelingt es dabei auch, diese zusätzlichen Hilfsmittel haftfest in die Polymerhülle des jeweiligen Korns einzubinden. Wird die Mitverwendung solcher zusätzlichen Hilfsstoffe gewünscht, so können diese - insbesondere je nach ihrem Lösungs- und Quellungsverhalten - in den Slurry vor dem Versprühen oder aber über ein getrenntes Dosierungssystem unmittelbar in die Sprühtrocknungszone eindosiert werden. Hilfsstoffe,die zu keiner unangemessenen zusätzlichen Verdickung des Sprühslurries führen, können diesen vor dem Versprühen zugesetzt werden, wobei es in einer besonderen Ausführungsform bevorzugt ist, diese Hilfsmittel unmittelbar vor der Einspeisung in den Sprühtrocknungsturm dem Slurry zuzugeben. Auch Hilfsstoffe mit zusätzlicher Klebkraft können -insbesondere unmittelbar vor dem Versprühen - dem Slurry direkt zugegeben werden, sofern hierdurch seine Verarbeitbarkeit nicht unangemessen beeinträchtigt wird. In Fällen der zuletzt genannten Art ist es dann aber auch möglich, solche Hilfsstoffe durch ein getrenntes Beschickungssystem der Sprühtrocknungszone zuzuführen und die Einbindung dieser Hilfsstoffe in die entstehenden rieselfähigen Pulver im Sprühturm vorzunehmen.

Beispiele für solche Hilfsstoffe sind Netz- und Konservierungsmittel, Konsistenzbildner und Zusatzkomponenten mit Klebkraft wie Nativstärke, Quellstärke, Stärkeether, Dextrine, ionogene Celluloseether und/oder sonstige wäßrige Polymerzubereitungen.

Bevorzugte Stärketypen der hier betroffenen Klasse können beispielsweise einen Carboxymethylierungsgrad von 0,1 bis 2,0 (DS) oder einen Oxalkylierungsgrad von 0,05 bis 1,5 (MS) aufweisen. Als carboxymethylierte und/oder alkoxylierte Stärken eignen sich sämtliche entsprechend modifizierten natürlichen Stärketypen aus Kartoffeln, Mais, Weizen, Reis, Milo, Tapioka und dergleichen, wobei Derivate auf Basis von Kartoffel- und/oder Maisstärke bevorzugt sind. Übliche Stellmittel ohne Klebkraft sind beispielsweise Kaolin und/oder Kreide.

Diese zusätzlich zu den Hauptkomponenten mitverwendeten Hilfsmittel machen vorzugsweise einen gewichtsmäßig untergeordneten Anteil gegenüber den Hauptkomponenten aus nichtionogenem Celluloseether und Redispersionspolymer aus.

Die Sprühtrocknung erfolgt in an sich bekannter Weise üblicherweise in Sprühtürmen, wobei der zu trocknende Slurry mit Hilfe von Zerstäubungsscheiben oder Einstoff- bzw. Mehrstoffdüsen eingesprüht werden kann. Die Trocknung der Dispersion wird mit heißen Gasen, z. B. mit Stickstoff oder Luft, durchgeführt. Dabei kann die Temperatur des Trocknungsgases beispielsweise etwa 90 °C bis 180 °C und vorzugsweise etwa 130 °C bis 170 °C betragen. Wesentlich ist insbesondere in den vorbereitenden Arbeitsphasen zur Sprühtrocknung und bei Beginn der Sprühtrocknung, daß die geforderte Temperaturbedingung - Temperaturen oberhalb des Trilbungspunkts der nichtionogenen Celluloseether - sicher eingehalten wird. Arbeitstemperaturen im Bereich von 60 °C bis 100 °C, aber auch Temperaturen oberhalb 100 °C kommen in Betracht. In einer bevorzugten Ausführungsform der Erfindung wird mit Komponenten gearbeitet, die ein Arbeiten etwa im Temperaturbereich von 75 °C bis 90 °C ermöglichen.

Das Einsatzgebiet für die erfindungsgemäßen Mehrkomponentenpulver betrifft den gesamten Bereich für die Anwendung solcher Stoffgemische. Beispielhaft seien genannt die Verwendung als Wandbelagsklebstoffe, insbesondere Tapetenkleister, sowie der Einsatz als vergütender Zusatz zu Anstrichstoffen, wie Farben und Lacke, und zu zementären Systemen. Insbesondere eignen sich diese Pulver als Zusätze bei Spachtel- und Ausgleichsmassen, Fliesenklebern und Spachtelmassen auf Gipsbasis. Erfindungsgemäß sprühgetrocknete Produkte stellen eine Rohstoffbasis dar, die in weiten Grenzen variiert Zugang zu bisher nicht erreichten Anwendungsvorteilen im Klebstoff- und bauchemischen Bereich ermöglicht.

**Beispiele**

Beispiel I

Es wurde eine Slurrymischung mit einem Festkörpergehalt von 35 Gew.-% wie folgt hergestellt:
In einem 2-Liter-Rührgefäß werden 289 g Polyvinylacetat-Dispersion (Festkörpergehalt: 60 Gew.-%, Drage-Epprecht-Viskosität: ca. 2000 mPas) vorgelegt. Unter ständigem Rühren wird mit 540 g Wasser verdünnt. Anschließend werden ca. 2,0 g Entschäumer zugefügt. Nachfolgend wird im Wasserbad auf ca. 75 °C bis 85 °C erwärmt.

Im nächsten Arbeitsschritt werden 173 g eines handelsüblichen Methylcellulosepulvers (Culminal MC 12000 P) in relativ feinteiliger Vermahlung (Mahlgrad 2) portionsweise eingemischt, wobei darauf zu achten ist, daß die Temperatur des Stoffgemisches nicht unter 75 °C absinkt. Nach Zugabe der Pulverware wird kurze Zeit zur vollständigen Homogenisierung des Slurries bei 80 °C gerührt.

Die Brookfield-Viskosität des in dieser Weise hergestellten Slurries liegt bei ca. 1500 mPas bis 2000 mPas.

Der Slurry wird nachfolgend bei Einhalten der Mischtemperatur in den Sprühturm gepumpt und mittels Mehrstoffdüse bzw. rotierendem Sprühteller feinteilig versprüht. Die im Gleichstrom zur Versprühung eingeleitete Luft hat eine Temperatur von ca. 150 °C. Es fällt ein gut rieselfähiges Sprühprodukt an, das sich durch agglomerierte Teilchen relativ einheitlicher Zusammensetzung und Struktur auszeichnet. Die mittlere Korngröße liegt im Bereich von 100 μm bis 500 μm.

Eine elektronenmikroskopische Darstellung der Kornstruktur zeigte polymerumhüllte Kerne aus Methylcellulose, wobei die kornbildenden Bestandteile haftfest miteinander verbunden sind.

Der Einsatz des erfindungsgemäß hergestellten Kombinationsproduktes bei der Verklebung von Wandbelägen zeigte Werte von Anfangshaftung, Endfestigkeit und insbesondere Feuchtfestigkeit, wie sie bisher in dieser Kombination nicht erzielt werden konnten.

Beispiel II

Es wurde eine Slurry-Mischung mit einem Festkörpergehalt von 25 Gew.-% analog Beispiel I hergestellt, wobei eine Methylcellulose (MC 7000 P), in Kombination mit einer Carboxymethylcellulose eingesetzt wurde.

Es werden 206 g Polyvinylacetat-Dispersion mit 667 g Wasser sowie 2 g Entschäumer im Wasserbad auf ca. 80 °C bis 90 °C erwärmt. Anschließend werden 100 g Methylcellulose (Culminal 7000 P) portionsweise eingemischt. Im weiteren werden nachfolgend 25 g Carboxymethylcellulose (Tylose C 600, Brookfield-Viskosität einer 2 %-igen Lösung, ca. 600 mPas) zugegeben und die Mischung wird bis zur vollständigen Homogenisierung des Slurries bei ca. 90 °C gerührt. Die Brookfield-Viskosität eines solchen Slurries liegt bei ca. 2500 mPas bis 3500 mPas.

Der Slurry wurde analog Beispiel I einer Sprühtrocknung unterzogen, wonach ein gut rieselfähiges Produkt einheitlicher Zusammensetzung und Struktur anfiel. Die mittlere Korngröße lag im Bereich von ca. 150 μm bis 500 μm. Die Kornstruktur

zeichnete sich durch polymerumhüllte Kerne, in diesem Fall bestehend aus Methylcellulose sowie Carboxymethylcellulose, aus.

Die Ergebnisse einer anwendungstechnischen Untersuchung zeigen, daß das Kombinationsprodukt keinerlei Entmischungsneigung zeigte. In den meisten Anwendungsfällen wurden für diese Kombination beste Feuchtfestigkeiten festgestellt.

Beispiel III

. Es wurde eine Slurry-Mischung analog Beispiel I mit einem Festkörpergehalt von 40 Gew.-% hergestellt, allerdings mit dem Unterschied, daß hierbei als Celluloseether eine feinteilige leicht propoxilierte Methylcellulose, mit ca. 3 Gew.-% angelagertem Propylenoxid bezogen auf Methylcellulose, (Culminal MHPC 3000 P) mit einem Flockungspunkt von etwa 70 °C zum Einsatz kommt.

Hierzu werden 332 g Polyvinylacetat-Dispersion mit 467 g Wasser sowie 2 g Entschäumer in zuvor beschriebener Weise auf dem Wasserbad auf ca. 80 °C bis 90 °C erwärmt. Nachfolgend werden 199 g Methylhydroxypropylcellulose portionsweise zugegeben und die Mischung wird kurze Zeit zur Homogenisierung gerührt. Die Brookfield-Viskosität dieses Slurries liegt bei ca. 1500 mPas bis 2500 mPas.

Bei der nachfolgend analog zu Beispiel I durchgeführten Sprühtrocknung wurde ein gut rieselfähiges homogenes Pulver mit einer mittleren Korngröße im Bereich von ca. 100 µm bis 500 µm erhalten.

Auch hier zeigte sich bei der elektronenmikroskopischen Darstellung der Kornstruktur, daß polymerumhüllte Kerne, in diesem Fall bestehend aus Methylhydroxypropylcellulose, entstanden waren.

Beispiel IV

Die Verfahrensweise zur Herstellung sowie Versprühung des Slurries wurde analog Beispiel I durchgeführt. Diese Slurry-Mischung hatte einen Festkörpergehalt von 25 Gew.-%.

Als Polymerkomponente wurde eine Polyvinylacetat-Dispersion (Festkörpergehalt: 55 Gew.-%, Drage-Epprecht-Viskosität: ca. 1700 mPas) mit einem Stärkeetheranteil von 20 % eingesetzt.

Die Zusammensetzung des Slurries ergibt sich wie folgt:
PVAc-Homopolymer Dispersion (20 % Stärkeether): 205 g
Methylcellulose MC 12000 P: 124 g
Entschäumer: 2 g
Wasser: 669 g

Die gemessene Brookfield-Viskosität des Slurries liegt bei ca. 2000 mPas.

Nachfolgende Sprühtrocknung ergibt ein gut rieselfähiges Pulverprodukt, mit einer mittleren Korngröße von ca. 150 µm - 500 µm, das für spezielle Verklebung von Wandbelägen Vorteile gegenüber dem in Beispiel I erhaltenen Produkt hinsichtlich der Anfangshaftung aufweist.

Beispiel V

Bei diesem Beispiel wird eine Slurry-Mischung mit einem Festkörpergehalt von 30 Gew.-% und einem Methylcellulose/ Polymerkomponenten-Verhältnis von 1 : 1,5 bezogen auf Festkörpergehalte hergestellt.

Die Herstellung und Versprühung erfolgte analog den vorherigen Beispielen. Als Polymerkomponente wurde eine Vinylacetat-Dibutylmaleinat Copolymerdispersion (Festkörpergehalt: 50 Gew.-%, Drage-Epprecht-Viskosität: ca. 2500 mPas) eingesetzt und als Celluloseether wurde in Variation zu Beispiel I eine Methylcellulose Culminal MC 3000 P verwendet.

Die Zusammensetzung der Slurry-Mischung ergibt sich wie folgt:
Vinylacetat/Dibutylmaleinat Copolymerdispersion: 358 g
Methylcellulose MC 3000 P: 119 g
Entschäumer: 2 g
Wasser: 521 g

Die Brookfield-Viskosität dieses Slurries liegt bei ca. 1500 mPas bis 2000 mPas.

Das erfindungsgemäß hergestellte Sprühprodukt zeigte auch in diesem Fall gute Rieselfähigkeit; die agglomerierten Pulverteilchen besitzen eine mittlere Korngröße im Bereich von 200 µm bis 500 µm.

Die Anwendung des erfindungsgemäß hergestellten Sprühproduktes zeigt vor allem bei Wandbelagsverklebung auf spezielle kunststoffvergütete Wandbeläge klebetechnische sowie verarbeitungstechnische Vorteile, wie sie in dieser Kombination bisher nicht erreicht wurden.

Beispiel VI

Der in diesem Beispiel hergestellte Slurry besitzt einen Festkörpergehalt von 30 Gew.-%, wobei das Verhältnis von eingesetztem Celluloseether zur Polymerdispersion 1 : 1 bezogen auf den Festkörper, beträgt.

Die Verfahrensweise zur Herstellung und Versprühung der Slurry entspricht den vorherigen Beispielen, allerdings wird als Polymerkomponente eine Styrolacrylat-Copolymerdispersion (Festkörper gehalt: 50 Gew.-%, Drage-Epprecht-Viskosität: ca. 1200 mPas) eingesetzt.

Die Zusammensetzung der zu versprühenden Slurry-Mischung ergibt sich wie folgt:

Styrolacrylat Copolymerdispersion: 298 g

Methylcellulose (MC 12000 P) 149 g

Entschäumer: 2 g

Wasser: 551 g

Die gemessenen Brookfield-Viskosität einer solchen Mischung liegt bei ca. 2000 mPas bis 2500 mPas. Es fällt ein gut rieselfähiges Sprühprodukt an, das sich durch agglomerierte Teilchen einheitlicher Zusammensetzung auszeichnet.

Ein derartiges Kombinationsprodukt eignet sich im besonderen Maße als Bindemittelzusatz zu Anstrichstoffen und Pulverfarben.

Beispiel VII

Die Herstellung des Slurries sowie alle Verfahrensweisen zur Sprühtrocknung wurden analog den vorherigen Beispielen durchgeführt:

Es wird ein Slurry mit einem Festkörpergehalt von 25 Gew.-% hergestellt, wobei als Polymerkomponente eine Terpolymer-Dispersion (Festkörpergehalt: 50 Gew.-%, Drage-Epprecht-Viskosität: ca. 2500 mPas) bestehend aus Vinylacetat, Dibutylmaleinat, Butylacrylat (Verhältnis 2 : 2 : 1) enthalten ist.

Als Celluloseether wird in bekannter Weise eine Methylcellulose (MC 12000 P) in den Slurry eingearbeitet, so daß sich eine Slurry-Zusammensetzung wie folgt ergibt:

Vinylacetat/Dibutylmaleinat/Butylacrylat Terpolymerdispersion: 246 g

Methylcellulose MC 12000 P: 124 g

Entschäumer: 2 g

Wasser: 628 g

Die Brookfield-Viskosität dieses Slurries liegt bei ca. 1500 mPas bis 2500 mPas.

Auch in diesem Fall erhält man nach der Versprühung ein gut rieselfähiges Pulverprodukt, welches bei Einsatz zur Verklebung schwerer Wandbeläge besonders geeignet ist.

**Ansprüche**

1. Rieselfähiges feinkörniges Trockenpulver auf Basis einer wasserlöslichen und/oder wasserquellbaren Kombination von nichtionogenen Celluloseethern und Redispersionspolymeren, gewünschtenfalls in Abmischung mit weiteren Hilfsstoffen mit und/ oder ohne Klebkraft, dadurch gekennzeichnet, daß die Kornstruktur des wenigstens überwiegenden Anteils des körnigen Trockenguts geschlossene Kerne der nichtionogenen Celluloseether aufweist, die von einer Hülle des Redispersionspolymeren umfaßt und mit dieser haftfest verbunden sind.

2. Rieselfähige Trockenpulver nach Anspruch 1, dadurch gekennzeichnet, daß sie als nichtionogene Celluloseether niedrig-Alkyl-Cellulosen, insbesondere Methylcellulose enthalten, deren Trübungspunkt in wäßriger Phase bevorzugt im Bereich von etwa 60 °C bis 100 °C liegt.

3. Rieselfähige Trockenpulver nach Ansprüchen 1 und 2, dadurch gekennzeichnet, daß die Kornhülle aus Redispersionspolymeren gebildet ist, die in Wasser dispergiert Klebkraft besitzen und dabei insbesondere aus Homo- und/oder Copolymeren von Vinylestern niederer Carbonsäuren und/oder (Meth) acrylat-Homo- und/oder -Copolymeren besteht.

4. Rieselfähige Trockenpulver nach Ansprüchen 1 bis 3, dadurch gekennzeichnet, daß sie Mischungsverhältnisse von nichtionogenen Celluloseethern zu Redispersionspolymeren im Bereich von 5 : 95 bis 95 : 5 und bevorzugt im Bereich von etwa 40 : 60 bis 60 : 40 aufweisen.

5. Rieselfähige Trockenpulver nach Ansprüchen 1 bis 4, dadurch gekennzeichnet, daß die rieselfähigen Körner einen mittleren Teilchendurchmesser im Bereich von etwa 50 $\mu$m bis 500 $\mu$m und vorzugsweise im Bereich von etwa 100 $\mu$m bis 300 $\mu$m aufweisen.

6. Rieselfähige Trockenpulver nach Ansprüchen 1 bis 5, dadurch gekennzeichnet, daß auch die gewünschtenfalls vorliegenden weiteren Hilfsstoffe mit und/oder ohne Klebkraft in die Polymerhülle haftfest eingebunden sind.

7. Rieselfähige Trockenpulver nach Ansprüchen 1 bis 6, dadurch gekennzeichnet, daß im Einzelkorn eine Mehrzahl von Kernen aus nichtionogenen Celluloseethern, die auch unterschiedliche Teilchengröße aufweisen können von der Polymerhülle haftfest umschlossen sind.

8. Verfahren zur Herstellung der rieselfähigen feinkörnigen Trockenpulver nach Ansprüchen 1 bis 7, dadurch gekennzeichnet, daß man die nichtionogenen Celluloseether als Pulver oder als wäßrige Pulveraufschlämmung mit der wäßrigen Polymerdispersion und gewünschtenfalls zusätzlichem Wasser innig vermengt, dabei die Temperatur der wäßrigen Phase wenigstens beim Trübungspunkt der nichtionogenen Cellulosether oder darüber hält und das wäßrige Stoffgemisch unter Einhaltung dieser Temperaturbedingung einer Sprühtrocknung unterwirft.

9. Verfahren nach Anspruch 8, dadurch gekennzeichnet, daß wäßrige Mischungen eines Festkörpergehalts von etwa 15 Gew.% bis 60 Gew.-%, bevorzugt von etwa 20 Gew.-% bis 50 Gew.-% der Sprühtrocknung unterworfen werden.

10. Verfahren nach Ansprüchen 8 und 9, dadurch gekennzeichnet, daß die Trocknung mit einem heißen Gas, vorzugsweise Stickstoff oder Luft, durchgeführt wird, welches eine Temperatur von 90 °C bis 180 °C, vorzugsweise von etwa 130 °C bis 170 °C aufweist.

11. Verfahren nach Ansprüchen 8 bis 10, dadurch gekennzeichnet, daß unmittelbar vor und/oder während des Vorgangs der Sprühtrocknung dem zu trocknenden wäßrigen Gut Hilfsstoffe zudosiert werden, wobei als Hilfsstoffe mit Klebstoffcharakter beispielsweise Nativ- oder Quellstärke, Dextrine, Stärkeether, ionogene Celluloseether und/oder sonstige wäßrige Polymerzubereitungen eingesetzt werden, während als Hilfsstoffe ohne Klebstoffcharakter insbesondere Füllstoffe, Stellmittel, Netzmittel, Retardierungsmittel, Entschäumer und/oder Konservierungsstoffe zugesetzt werden.

12. Verfahren nach Ansprüchen 8 bis 11, dadurch gekennzeichnet, daß die nichtionogenen Celluloseether als Trockenpulver einer mittleren Teilchengröße von etwa 100 $\mu$m bis 300 $\mu$m - gegebenenfalls unter Zusatz weiterer Wassermengen - in die wäßrigen Polymerdispersionen bei Temperaturen oberhalb des Trübungspunktes der eingesetzten nichtionogenen Celluloseether eingemischt werden, woraufhin gewünschtenfalls zur vollständigen Homogenisierung des Slurries bei diesen Temperaturen weitergerührt und dann das Material der Sprühtrocknung zugeführt wird.

13. Verwendung der rieselfähigen feinkörnigen Trockenpulver nach Ansprüchen 1 bis 7 zur Herstellung von wäßrigen Klebstoffen, insbesondere Wandbelagsklebstoffen mit hoher Feuchtfestigkeit, als Zusatz zu zementären Systemen, z. B. Spachtel-, Ausgleichs- und Modelliermassen oder Fliesenklebern sowie als Zusatz zu Anstrichstoffen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 910 374 (HOECHST)<br>* Ansprüche *<br>--- | | C 08 J 3/12<br>C 09 J 101/26<br>C 08 L 1/26 //<br>(C 09 J 101/26<br>C 09 J 131:04<br>C 09 J 133:08<br>C 09 J 133:10 ) |
| A | DE-A-3 235 189 (HOECHST)<br>* Ansprüche *<br>--- | | |
| A | BE-A- 680 334 (MO OCH DOMSJO AB)<br>* Anspruch 1 *<br>----- | | |

RECHERCHIERTE
SACHGEBIETE (Int. Cl.5)

C 09 J
C 08 L
C 08 J

Der vorliegende Recherchenbericht wurde für alle Patentansprüche erstellt

| Recherchenort | Abschlußdatum der Recherche | Prüfer |
|---|---|---|
| DEN HAAG | 12-07-1990 | SOMERVILLE F.M. |